# EUROPEAN PATENT APPLICATION

(11) **EP 1 814 335 A1**
(43) Date of publication of application: **01.08.2007**
(21) Application number: 07100672.0
(22) Date of filing: 17.01.2007
(51) Int. Cl.: H04N 7/26

(54) **Image communication terminal and method of processing image communication data in image communication terminal**

(30) Priority: 26.01.2006 KR 20060008552
(71) Applicant: Samsung Electronics Co., Ltd., Suwon-si, Gyeonggi-Do (KR)
(72) Inventor: Jung, Jin-Woo, Yeongtong-gu, Suwon-si Gyeonggi-do (KR)
(74) Representative: Grünecker, Kinkeldey, Stockmair & Schwanhäusser Anwaltssozietät

(57) **Abstract**

Disclosed is an image communication terminal including a main processor that controls operation in accordance with image communications, decodes video data, and encodes images photographed through a camera, and a modem processor that processes data in accordance with radio communications, divides image communication data into video and audio data, and encodes voice signals input from a microphone to combine encoded audio data with the video data to transmit them to the communication network. Accordingly, the utility of the main processor is increased and a quantity of communication data between the modem processor and the main processor is reduced. Further, voice quality is provided at an optimal level.

## Description

The present invention relates to an image communication terminal, and more particularly to an image communication terminal for providing superior image communications and a method of processing image communication data in the image communication terminal.

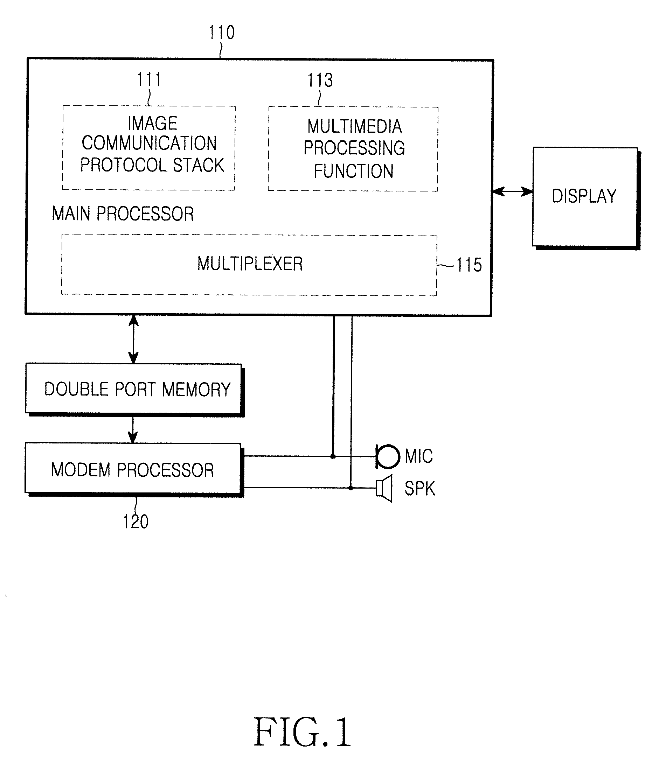

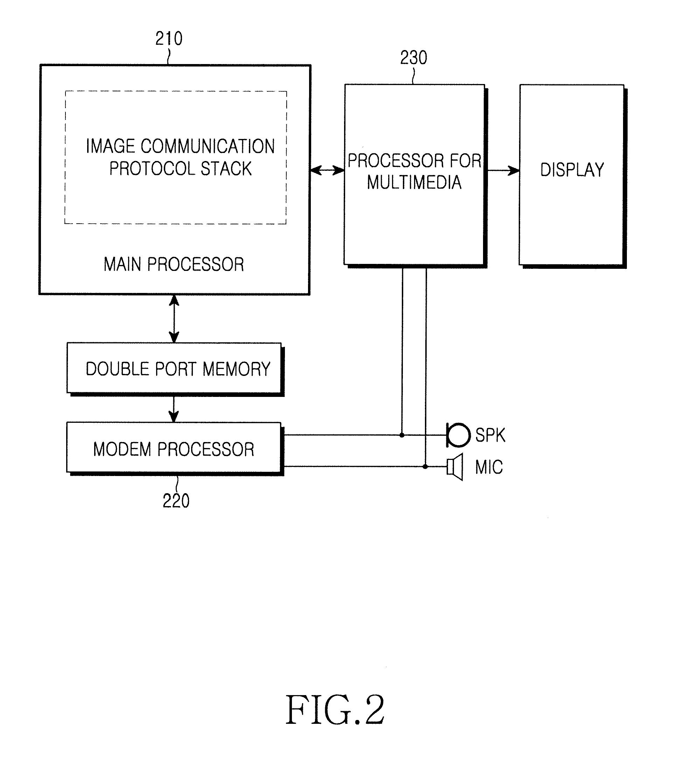

A conventional H.324M-based image communication terminal mainly employs two system configurations. A first system configuration is illustrated in FIG.1, and a second system configuration is illustrated in FIG. 2. As shown in the first system configuration in FIG. 1, a multimedia processing in accordance with H.324M stack processing and image communications, i.e., video encoding/decoding, audio encoding/decoding and audio noise processing, is performed in one processor using a high-speed main processor 110. A modem processor 120 performs modulation/demodulation processing of data in accordance with radio communications, outputs image communication data received from a communication network to the main processor 110 in image communications, and transmits image communication data input from the main processor to the communication network. Further, the modem processor 120 processes audio data in voice communications. Accordingly, the main processor 110 includes an image communication protocol stack 111 for H.324M stack processing, a multimedia processing function 113 and a multiplexer 115 for multimedia processing. The main processor 110 should provide as fast a speed as possible in order to perform all the processes required for an image communication program and multimedia processing. This has a disadvantage in that processing costs are relatively high as compared with a method of using a conventional CPU, and many bandwidths are required in communications between the modem processor 120 and the main processor 110.

As shown in the second system configuration in FIG. 2, a processor 230 for multimedia is provided in addition to a main processor 210 and a modem processor 220, and video and audio data are processed in accordance with image communications. Thus, multimedia processing such as video encoding/decoding, audio encoding/decoding and audio noise processing and image communication protocol stack processing are divided, and each is processed by an additional processor in order to improve performance. The modem processor 220 operates similar to the modem processor 120 shown in FIG. 1. Consequently, three processors composed of the main processor 210, the modem processor 220 and the processor 230 for multimedia are used, disadvantageously resulting in an increased size and cost of the image communication terminal. Further, an additional device for data exchanges between the main processor 210 and the processor 230 for multimedia is required.

As described above, a serious overflow problem in the main processor 210 is caused when performing video and audio encoding/decoding in accordance with image communications with only the main processor 210. Further, since it induces a large amount of data transmission/reception between the main processor 110 or 210 and the modem processor 120 or 220 to perform a multimedia processing for image communication data with only the main processor 210 or through the processor 230 for multimedia in image communications, a problem arises in that an intermediate medium with a high bandwidth is required.

Accordingly, the present invention has been made to solve the above-mentioned problems occurring in the prior art. It is the object of the present invention to provide an image communication terminal for preventing a system overflow by reducing a multimedia processing load of a main processor in image communications, and a method of processing image communication data in the image communication terminal.

This object is solved by the subject matter of the independent claims.

Preferred embodiments are defined in the dependent claims.

An aspect of the present invention is to provide an image communication terminal for preventing a system overflow by reducing a quantity of transmission/reception data between a modem processor and a main processor, and a method of processing image communication data in the image communication terminal.

A further aspect of the present invention is to provide an image communication terminal for preventing an audio data processing delay and enhancing a tone quality by respectively processing audio and video data in individual processors in image communication, and a method of processing image communication data in the image communication terminal.

In order to accomplish the above, according to the present invention, there is provided an image communication terminal including a main processor for performing a control operation in accordance with image communications, decoding video data input in the image communications and outputting the video data to a display, and encoding images photographed through a camera and outputting the images, and a modem processor for processing data in accordance with radio communications, dividing image communication data received from a communication network in image communications into video and audio data, outputting the video data to the main processor and to decode the audio data to output them to a speaker, and encoding a voice input from a microphone to combine encoded audio data with the video data input from the main processor to transmit them to the communication network.

According to the present invention, there is provided a method of processing image communication data, including a modem processor outputting image communication data received from a communication network in image communications into video and audio data" outputting the video data to a main processor and decoding the audio data to output the audio data to a speaker, a main processor decoding the video data input from the modem processor and outputting the video data to a display, the main processor encoding images photographed through a camera in the image communications to output the images to the modem processor, and the modem processor encoding voice signals input through a microphone and combining encoded voice signals with the video data input from the main processor to transmit them to a communication network.

The present invention will be more apparent from the following detailed description taken in conjunction with the accompanying drawings, in which:
FIG. 1 is a block diagram showing a first configuration of a conventional image communication terminal;
FIG. 2 is a block diagram showing a second configuration of a conventional image communication terminal;
FIG. 3 is a block diagram showing a configuration of an image communication terminal according to the present invention;
FIG. 4 is a view illustrating an operational processor of a main processor and a modem processor according to the present invention; and
FIG. 5 is a view illustrating a process of processing control signals of the main processor and the modem processor according to the present invention.

Hereinafter, preferred embodiments of the present invention will be described with reference to the accompanying drawings. In the following description, the same elements will be designated by the same reference numerals although they are shown in different drawings. Further, various specific definitions found in the following description, such as specific values of packet identifications and contents of displayed information, are provided to assist in the general understanding of the present invention, and it is apparent to those skilled in the art that the present invention can be implemented without such definitions. Further, in the following description of the present invention, a detailed description of known functions and configurations incorporated herein will be omitted for the sake of clarity and conciseness.

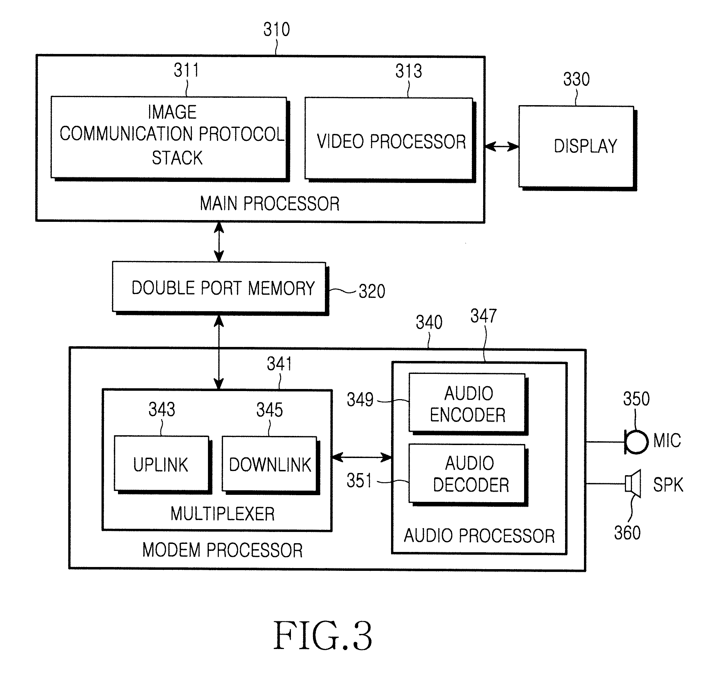

FIG. 3 is a block diagram showing a configuration of an image communication terminal according to the present invention. Referring to FIG. 3, the image communication terminal includes a main processor 310, a double port memory 320, a display 330, a modem processor 340, a microphone 350 and a speaker 360.

The main processor 310 performs control operation in accordance with image communications, decodes video data input from the modem processor 340 in the image communications and outputs the data to the display 330, and encodes video photographed through a camera and outputs the video to the modem processor 340. Accordingly, the main processor 310 includes an image communication protocol stack 311 and a video processor 313 for encoding/decoding video data. The image communication protocol stack may be, for example, a standard H.324M protocol stack including signaling containing H.245 protocol and an image communication control agent.

The display 330 displays video and various text data, which are output to the main processor 310.

The double port memory 320 is used to exchange video data and control information between the modem processor 340 and the main processor 310.

The modem processor 340 performs data modulation/demodulation and baseband processing in accordance with radio communications such as voice and image communications. Further, the modem processor 340 divides image communication data received from a communication network in image communications into video and audio data, outputs the video data to the main processor 310 and decodes the audio data and outputs the audio data to the speaker 360. Furthermore, the modem processor 340 encodes a voice input through the microphone 350, combines encoded audio data with video data input from the main processor 310 and transmits them to the communication network in the image communications. In addition, the modem processor 340 processes audio data in voice communications.

Accordingly, the modem processor 340 includes a multiplexer 341 and an audio processor 347. The multiplexer 341 includes an uplink 343 for controlling uplinks of data and a downlink 345 for controlling downlink of data. The multiplexer 341 divides image communication data received from a communication network in image communications into video and audio data to output the video and audio respectively to the main processor 310 and to the audio processor 347, combines and outputs the audio data input from the audio processor 347 and the video data input from the main processor 310 and transmits them to the communication network through a radio unit (not shown) provided to the modem processor 340. Further, the multiplexer 341 may be configured and operated in accordance with an H.223 protocol. The audio processor 347 includes an audio decoder 351 for decoding audio data input from the multiplexer 341 and outputting the data to the speaker 360, and an audio encoder 349 for encoding audio signals input from the microphone 350 and outputting the signals to the multiplexer 341. The audio processor 347 also performs the aforementioned operation in voice communications.

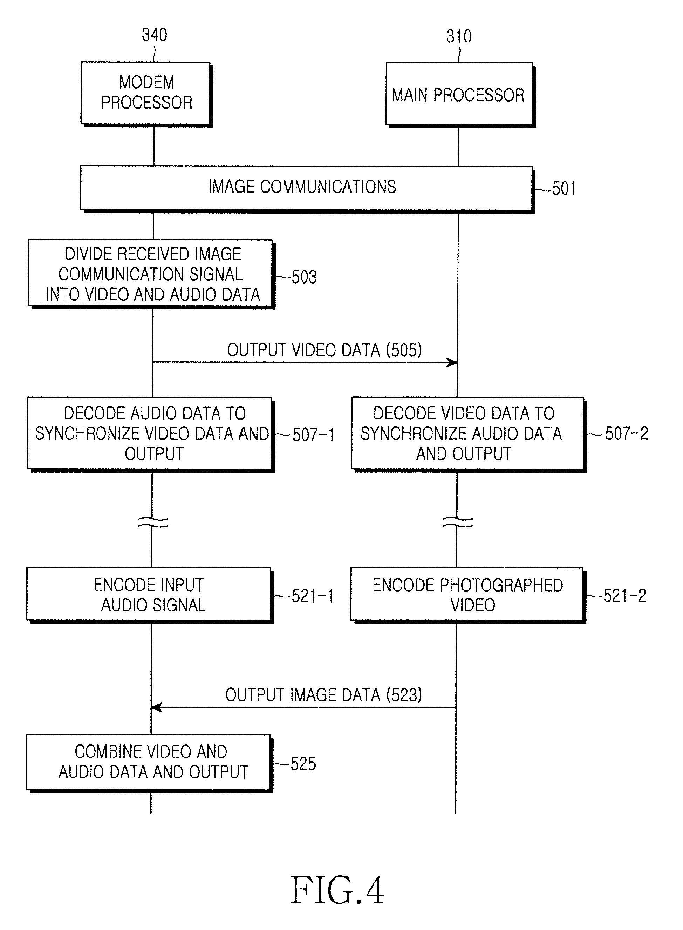

FIG. 4 a view illustrating an operational processor of a main processor and a modem processor according to the present invention. Steps 501 to 507-2 of FIG. 4 are processes of processing image data received from a communication network in image communications, and steps 521-1 to 525 are processes of processing image data transmitted to the communication network in the image communications, which may be simultaneously processed depending on a communication condition.

Referring to FIG. 4, if image communications are preformed at the step 501, the modem processor 340 divides image communication data received from a communication network into video and audio data at step 503 and proceeds to step 505. The modem processor 340 outputs the video data to the main processor 310 at step 505 and proceeds to step 507-1, where the modem processor 340 decodes the audio data. Further, the modem processor 340 outputs decoded voice signals to the speaker 360 in accordance with synchronous signals received from the main processor 310. Meanwhile, the main processor 310 receiving the input audio data at step 505 decodes the video data and outputs synchronous signals at step 507-2 so as to output decoded video signals while synchronizing with decoded voice signals.

The modem processor 340 encodes audio signals input through the microphone 350 at step 521-1 and proceeds to step 525. The main processor 310 encodes photographed images at step 521-2 and proceeds to step 523. The main processor 310 outputs image data to the modem processor 340 at step 523. The modem processor 340 combines the video and audio data to transmit them to the communication network at step 525.

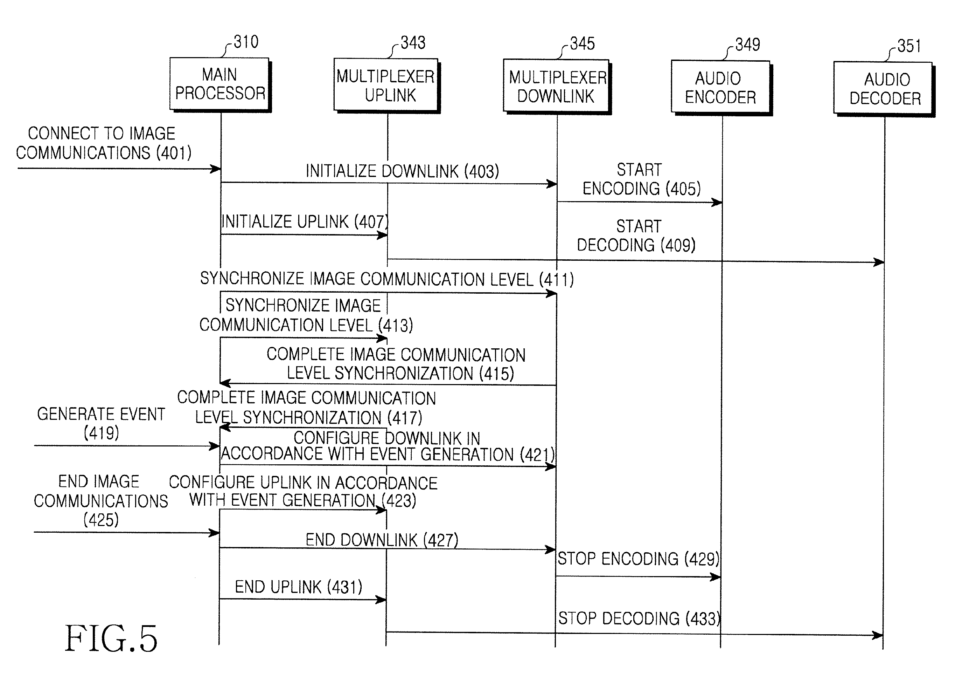

FIG. 5 is a view illustrating a process of processing control signals of the main processor and the modem processor according to the present invention. Referring to FIGs. 3 and 5, the image communication terminal performs steps 401 to 409 to initialize the multiplexer 341 of the modem processor 340 and the audio processor 347. If an image communication path is formed in accordance with image communication performance at step 401, the main processor 310 proceeds to step 403 to transmit a downlink initial signal to the multiplexer downlink 345. The multiplexer downlink 345 receiving the downlink initial signal transmits an encoding start signal to the audio encoder 349 at step 405. The audio encoder 349 receiving the encoding start signal starts encoding. Further, main processor 310 transmits an uplink initial signal to the multiplexer uplink 343 at step 407, and the muliplexer uplink 343 receiving the uplink initial signal outputs a decoding start signal to the audio decoder 351 at step 409. The audio decoder 351 receiving the decoding start signal starts decoding.

If the initialization is completed, the image communication terminal performs negotiation for a multiplexing/demultiplexing method to be used in an image communication call process with a correspondent terminal. Accordingly, the main processor 310 and the modem processor 340 perform steps 411 to 417. The main processor 310 transmits an image communication level synchronous signal to the multiplexer downlink and uplink 345 and 343 at steps 411 and 413, respectively. The multiplexer downlink 345 receiving the image communication level synchronous signal performs image communication level synchronization and transmits an image communication level synchronous end signal to the main processor 310 at step 415. Further, the multiplexer uplink 343 receiving the image communication level synchronous signal performs image communication level synchronization and transmits an image communication level synchronous end signal to the main processor 310 at step 417.

Thereafter, the main processor 310 performs a setup for audio and video channels used in a current image communication call and performs operations of adding or eliminating the audio and video channels and renewing multiplexer/demultiplexer tables in accordance with event occurrence, in steps 419 to 423. If an event occurs at step 419, the main processor 310 transmits a downlink configuration signal in accordance with the event occurrence to the multiplexer downlink 345 at step 421 and transmits a downlink configuration signal in accordance with the event occurrence to the multiplexer uplink 343 at step 423.

If the image communication is ended at step 425, the main processor 310 transmits a downlink end signal to the multiplexer downlink 345 at step 427, and the multiplexer downlink 345 receiving the downlink end signal transmits an encoding stop signal to the audio encoder 349 at step 429. If the audio encoder 349 receives the encoding stop signal, it stops encoding. Further, the main processor 310 transmits an uplink end signal to the multiplexer uplink 343 at step 431, and the multiplexer uplink 343 receiving the uplink end signal transmits a decoding stop signal to the audio decoder 351 at step 433. If the audio decoder 351 receives the decoding stop signal, it stops decoding.

The present invention has an advantage in that the main processor 310 processes video data and the modem processor 340 processes audio data in image communications so that the utility of the main processor 310 can be increased and a quantity of communication data between the modem processor 340 and the main processor 310 can be reduced. Further, voice quality can be provided at an optimal level similar to voice communications.

While the invention has been shown and described with reference to certain preferred embodiments thereof, it will be understood by those skilled in the art that various changes in form and details may be made therein without departing from the scope of the invention as defined by the appended claims.

## Claims

1. An image communication terminal, comprising:
a main processor for performing a control operation in accordance with image communications, decoding video data input in the image communications, outputting the video data to a display, and encoding images photographed through a camera and outputting the images to a modem processor; and
a modem processor for processing data in accordance with radio communications, dividing image communication data received from a communication network in image communications into video and audio data, outputting the video data to the main processor, decoding the audio data and outputting the audio data to a speaker, and encoding audio signals input from a microphone and combining encoded audio signals with the video data inputted from the main processor to transmit the encoded audio signals and video data to the communication network.

2. The image communication terminal as claimed in claim 1, wherein the main processor includes an image communication protocol stack and an image processor for encoding and decoding video data.

3. The image communication terminal as claimed in claim 2, wherein the image communication protocol stack is a standard H. 324M- type protocol stack and includes signaling containing H.245- type protocol and an image communication control agent.

4. The image communication terminal as claimed in one of claims 1 to 3, wherein the modem processor comprises:
a multiplexer for dividing the image communication data received from the communication network in image communications into the video and audio data, outputting the video and audio data to the main processor and an audio processor, respectively, and combining the audio and video data respectively input from the audio processor and the main processor to output the audio and video data; and
the audio processor having an audio decoder for decoding the audio data input from the multiplexer and outputting the decoded audio data to the speaker, and for encoding the audio signals input from the microphone and outputting the encoded audio signals to the multiplexer.

5. The image communication terminal as claimed in one of claims 1 to 4, wherein the modem processor outputs the decoded audio data while synchronizing it with the decoded video data in accordance with synchronous signals input from the main processor when outputting the decoded audio data.

6. The image communication terminal as claimed in one of claims 1 to 5, wherein the main processor outputs, to the modem processor, uplink and downlink initialization signals of the multiplexer, an image communication level synchronous signal and uplink and downlink configuration signals of the multiplexer, when the image communications are connected, and outputs uplink and downlink end signals of the multiplexer when the image communications are ended; and
the modem processor initializes the uplink and downlink of the multiplexer and starts encoding and decoding of the audio data when the uplink and downlink initialization signals of the multiplexer are input, synchronizes an image communication level to output a synchronous end signal to the main processor when the image communication synchronous signal is input, and ends the encoding and decoding of the audio data when the uplink and downlink end signals of the multiplexer are input.

7. The image communication terminal as claimed in one of claims 1 to 6, wherein the modem processor processes audio data in voice communications.

8. A method of processing image communication data in an image communication terminal, comprising the steps of:
outputting, through a modem processor, image communication data received from a communication network in image communications into video and audio data, outputting the video data to a main processor, decoding the audio data and outputting the audio data to a speaker;
decoding the video data and outputting the video data to a display;
encoding images photographed through a camera in the image communications and outputting the images to the modem processor by means of the main processor; and
encoding audio signals input through a microphone, combining the encoded audio signals with the video data, input from the main processor, and transmitting, by the modem processor, the audio signals and video data to a communication network.

9. The method as claimed in claim 8, wherein the modem processor outputs the decoded audio data while synchronizing it with the decoded video data in accordance with synchronous signals input from the main processor when outputting the decoded audio data.
